# EUROPEAN PATENT SPECIFICATION

(11) **EP 3 739 330 B1**
(45) Date of publication and mention of the grant of the patent: **11.12.2024**
(21) Application number: 19174043.0
(22) Date of filing: 13.05.2019
(51) Int. Cl.: G01N 29/04, G10K 11/34, G01S 15/89, B61L 27/57, G01N 29/11, B61K 9/12, G01N 29/07, G01N 29/32, G01N 29/27, G01N 29/26, G01N 29/24

(54) **IN-SERVICE HIGH SPEED RAIL WHEEL TESTING**
HOCHGESCHWINDIGKEITSSCHIENENRADPRÜFUNG WÄHREND DES BETRIEBS
TEST EN SERVICE ET A GRANDE VITESSE DE ROUES DE CHEMIN DE FER

(43) Date of publication of application: 18.11.2020
(73) Proprietor: Baker Hughes Digital Solutions GmbH, 50354 Hürth (DE)
(72) Inventor: FRANZEN, Andreas, 50354 Hürth (DE); HENRIX, Frank, 50354 Hürth (DE); WERNER, Daniel, 50354 Hürth (DE)
(74) Representative: Novagraaf Group

(56) References cited:
- WO-A1-2013/028717
- WO-A1-2019/075347
- DE-A1- 102015 225 780
- US-B2- 7 594 439

## Description

### BACKGROUND

Non-destructive testing (NDT) is a class of analytical techniques that can be used to inspect a target, without causing damage, to ensure that the inspected target meets required specifications. For this reason, NDT has found wide acceptance in industries such as aerospace, power generation, oil and gas transport or refining, and transportation, that employ structures that are not easily removed from their surroundings.

As an example, global railroad standards can require train wheels to be ultrasonically inspected after manufacture and during maintenance on a regular basis. In ultrasonic testing, acoustic (sound) energy in the form of waves can be directed towards the train wheel. As the ultrasonic waves contact and penetrate the train wheel, they can reflect from features such as outer surfaces and interior defects (e.g., cracks, porosity, etc.). An ultrasonic sensor can acquire ultrasonic measurements of acoustic strength as a function of time. Subsequently, these ultrasonic measurements can be analyzed to provide testing results that characterize defects present within a train wheel, such as their presence or absence, location, and/or size. DE 102015225780 is concerned with an ultrasonic testing method for testing a rotary element. US 7594439 is concerned with ultrasonic testing of a workpiece having an uneven surface. WO 2013/028717 is concerned with detecting defects in a railway rail.

### SUMMARY

Various aspects of the disclosed subject matter may provide improved methods and systems to accurately perform ultrasonic testing of wheels that suffer from wear and tear due to use.

According to an aspect of the present invention, there is provided a method of ultrasonically testing a wheel as claimed in claim 1.

One or more of the following features can be included in any feasible combination.

In one implementation, the first horizontal steering angle can be a sum of the first correction angle and a first predetermined horizontal steering angle associated with the first vertical steering angle. The method includes receiving a data set including values of a plurality of vertical steering angles and values of a plurality of predetermined horizontal steering angles corresponding to the plurality of vertical steering angles. The plurality of vertical steering angles includes the first vertical steering angle and the plurality of predetermined horizontal steering angle includes the first predetermined horizontal steering angle. In yet another implementation, the method can further include receiving at least a portion of the ultrasonic beam reflected by a defect in the wheel, and determining a first defect location of the defect. In another implementation, the method can further include positioning the ultrasonic probe at the first location.

In one implementation, the method can further include determining, based on the surface profile, a second correction angle associated with the ultrasonic probe which can be positioned at a second location on the wheel surface. The second correction angle can be indicative of a second defect of the wheel surface at the second location. The method can also include positioning the ultrasonic probe at the second location. The method can further include transmitting, by the ultrasonic probe located at the second location, a second ultrasonic beam along a second direction in the wheel. The second direction can be indicative of a second horizontal steering angle and a second vertical steering angle. The second horizontal steering angle can be based on the second vertical steering angle and the second correction angle.

In one implementation, the ultrasonic probe can include a plurality of ultrasonic active elements configured to generate one or more ultrasonic sub-beams. In another implementation, transmitting the ultrasonic beam along the first direction can include determining one or more phases and one or more amplitudes associated with the one or more ultrasonic sub-beams. In yet another implementation, the method can further include determining the profile of the wheel surface based on echo of ultrasonic beams reflected by predetermined wheel geometries.

According to another aspect of the present invention, there is provided a system for ultrasonically testing a wheel as claimed in claim 8.

One or more of the following features can be included in any feasible combination.

In one implementation, the first horizontal steering angle can be a sum of the first correction angle and a first predetermined horizontal steering angle associated with the first vertical steering angle. The operations include receiving a data set including values of a plurality of vertical steering angles and values of a plurality of predetermined horizontal steering angles corresponding to the plurality of vertical steering angles. The plurality of vertical steering angles includes the first vertical steering angle and the plurality of predetermined horizontal steering angle includes the first predetermined horizontal steering angle.

In one implementation, the ultrasonic probe can be configured to receive at least a portion of the ultrasonic beam reflected by a defect in the wheel, and the at least one data processor can be configured to determine a first defect location of the defect. In another implementation, the operations can further include determining, based on the surface profile, a second correction angle associated with the ultrasonic probe configured to be positioned at a second location on the wheel surface. The second correction angle can be indicative of a second defect of the wheel surface at the second location. The method can also include transmitting a second control signal to a rotation unit. The rotation unit can be configured to position the ultrasonic probe at the second location based on the second control signal.

In one implementation, the operations can further include transmitting a third control signal to the ultrasonic probe located at the second location. The ultrasonic probe can be configured to transmit a second ultrasonic beam along a second direction in the wheel. The second direction can be indicative of a second horizontal steering angle and a second vertical steering angle. The second horizontal steering angle can be based on the second vertical steering angle and the second correction angle. In another implementation, the ultrasonic probe can include a plurality of ultrasonic active elements configured to generate one or more ultrasonic sub-beams. In yet another implementation, the operations can further include determining, based on the first direction, one or more phases and one or more amplitudes associated with the one or more ultrasonic sub-beams. In yet another implementation, the operations can further include determining the profile of the wheel surface based on echo of ultrasonic beams reflected by predetermined wheel geometries.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

These and other capabilities of the disclosed subject matter will be more fully understood after a review of the following figures, detailed description, and claims.

### DESCRIPTION OF DRAWINGS

These and other features will be more readily understood from the following detailed description taken in conjunction with the accompanying drawings, in which:
FIG. 1 is an image illustrating a train and a train wheel;
FIG. 2A is an image illustrating one exemplary embodiment of an operating environment including an ultrasonic testing system having an ultrasonic probe for inspection of train wheels;
FIG. 2B is a schematic diagram illustrating a zoomed-in view of the ultrasonic testing system of FIG. 2A;
FIG. 3A is an exemplary schematic view of a first cross-section of a train wheel;
FIG. 3B is an exemplary schematic view of a second cross-section of the train wheel in FIG. 3A;
FIG. 4A illustrates an exemplary vertical steering angle of an ultrasonic beam emanating from the ultrasonic probe;
FIG. 4B illustrates an exemplary horizontal steering angle of the ultrasonic beam in FIG. 4A;
FIG. 4C illustrates an exemplary plot of vertical steering angles and horizontal steering angles for various depths of internal defects in a train wheel;
FIG. 5 is a flow chart of an exemplary method for detecting defects in a wheel with a deformed surface;
FIGS. 6A illustrates exemplary echo detection for various horizontal steering angles for a wheel surface without wear and tear effects on running tread; and
FIGS. 6B illustrates exemplary echo detection for various horizontal steering angles for a wheel surface with exemplary wear and tear effects on running tread.

It is noted that the drawings are not necessarily to scale. The drawings are intended to depict only typical aspects of the subject matter disclosed herein, and therefore should not be considered as limiting the scope of the disclosure. Those skilled in the art will understand that the systems, devices, and methods specifically described herein and illustrated in the accompanying drawings are non-limiting exemplary embodiments and that the scope of the present invention is defined solely by the claims.

### DETAILED DESCRIPTION

Train wheels can develop defects, such as cracks and damages, over time during use. If this defect becomes too severe, it can cause the wheel to break. To avoid failure of train wheels during service, they can be inspected periodically. In some cases, because damage is not visible on the surface of the train wheel, inspection can include ultrasonic testing. In ultrasonic testing, ultrasonic probes can be positioned on the train wheel and they can send and receive ultrasonic waves (e.g., high frequency sound waves) to detect defects beneath the surface of a train wheel. Existing ultrasonic probes can detect a defect by directing ultrasonic waves at the defect and detecting the portion of the ultrasonic wave reflected by the defect. Wear and tear can deform the surface of the train wheel on which the ultrasonic probes are placed. Such deformation can misalign the ultrasonic probe that can prevent/ reduce interaction between the ultrasonic wave and the defect resulting in erroneous defect detection. The misalignment of the ultrasonic probe can be reduced by detecting a surface profile of the train wheel and orienting the ultrasonic probe to compensate for the deformations on the train wheel surface. Accordingly improved ultrasonic testing systems and corresponding methods are provided that can generate the wheel surface profile and accordingly vary the orientation of the ultrasonic probe as it travels over the wheel surface.

Embodiments of ultrasonic testing systems and corresponding methods for validating ultrasonic measurements acquired for train wheels are discussed herein. However, embodiments of the disclosure can be employed for ultrasonic testing of other target objects without limit.

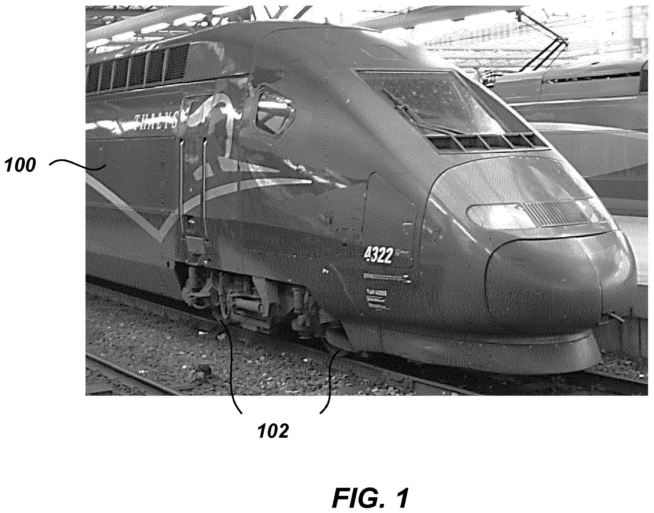

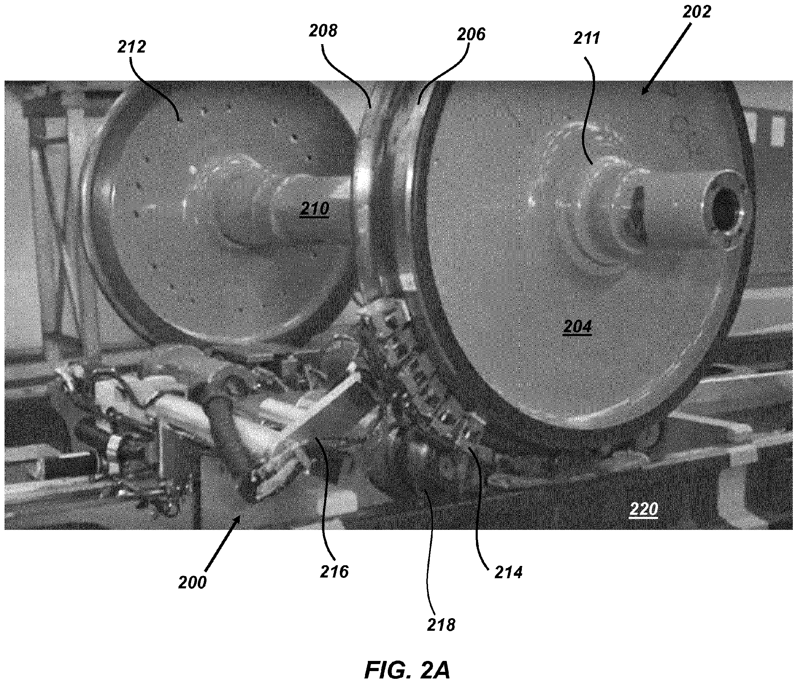

FIG. 1 illustrates an embodiment of a train 100 including train wheels 102. FIG. 2A illustrates an exemplary embodiment of an ultrasonic testing system 200 for inspection of train wheel 202. As shown, the train wheel can include a wheel disk 204, a running tread 206, and a wheel flange 208. The wheel disk 204 can form a center of the wheel and the running tread 206 can form a circumferential outer surface. The wheel flange 208 can be formed on one side of the wheel and extend radially outward from the running tread 206. The wheel disk 204 can include one or more holes therethrough. As shown, a primary hole 211 can be positioned at about a center of the wheel disk and be configured for receipt of an axle 210 therethrough. One or more secondary holes 212 can be formed radially outward from the primary hole and configured for coupling to other components to the train wheel, such as brake disks (not shown).

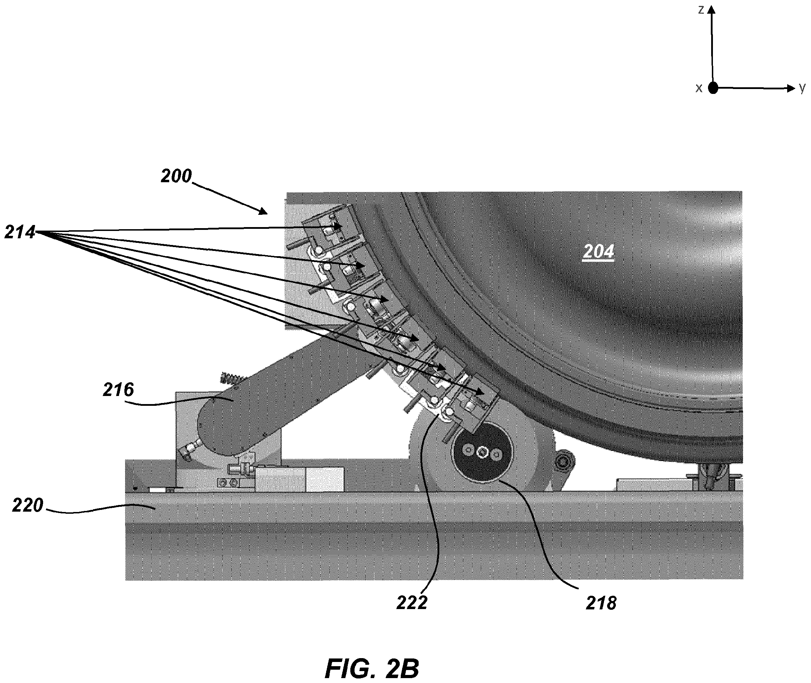

FIG. 2B illustrates a side view of the ultrasonic testing system 200. The ultrasonic testing system 200 can include ultrasonic probes 214, a probe holder 222, a probe holder mount 216, and a lift and rotation unit 218. As shown, multiple ultrasonic probes 214 can be oriented with respect to one another and with respect to the wheel 204 by the probe holder 222. The probe holder 222 in turn can be coupled to the probe holder mount 216. When using the ultrasonic testing system 200 for inspection of a train wheel 202, the lift and rotation unit 218 can be configured to raise the train wheel 202 and rotate the train wheel 202 about an axis extending through the primary hole. The probe holder mount 216 can be coupled to the probe holder 222 and it can be configured to position the ultrasonic probes in contact with the running tread. The ultrasonic testing system 200 can include a control system (e.g., comprising processors and memory) configured to control the operation of the various components of the ultrasonic testing system 200 (e.g., ultrasonic probes 214, the probe holder 222, the probe holder mount 216, and the lift and rotation unit 218, etc.). The control system can vary the orientation of the ultrasonic probes 214 with respect to the running tread 206 and/or instruct the ultrasonic probes 214 to detect internal defects in the wheel disk 204. The control system can move the running tread 206 relative to the ultrasonic probes 214 (e.g., by activating the lift and rotation unit 218).

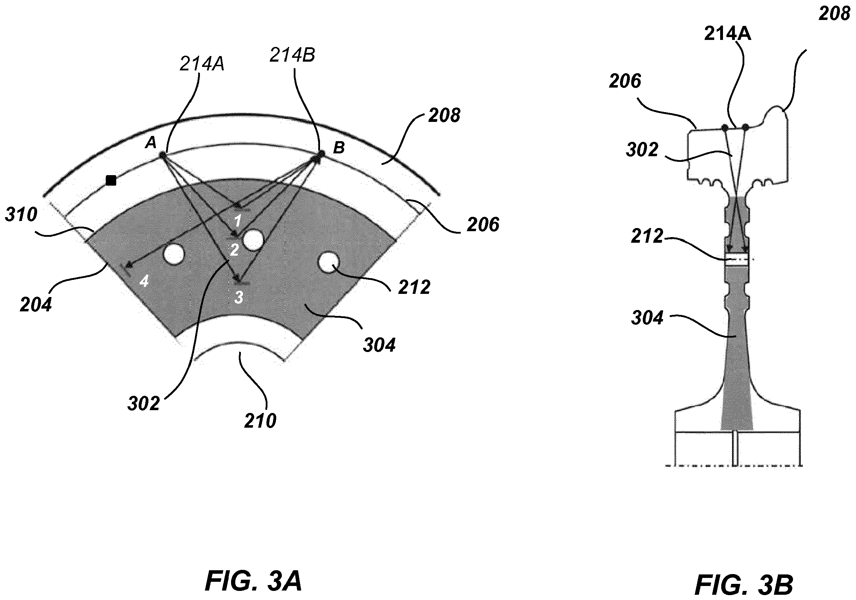

FIG. 3A is an exemplary schematic view of a first cross-section of the train wheel 202. As shown, ultrasonic probes 214A and 214B for ultrasonic testing according to an existing technique are positioned on the train wheel 202 (e.g., on the running thread 206 of the train wheel 202). FIG. 3B is an exemplary schematic view of a second cross-section of the train wheel 202 (e.g., orthogonal to the first cross-section). The remaining portions of the ultrasonic testing system are omitted for clarity.

In general, the ultrasonic probes 214A and 214B can include ultrasonic active elements configured to generate and/or measure ultrasonic waves (also referred to as ultrasonic beams) for ultrasonic inspection (e.g., of the train wheel 202). When ultrasonic beams pass through a material (e.g., ultrasonic beam 302 passes through inspection area 304 of train wheel 202), they can reflect from surfaces of the material, such as interior defects (e.g., defects 1, 2, 3, 4, etc.) and outer surfaces. Material features, such as geometric boundaries and defects, can reflect ultrasonic beams in different ways. Some material features can reflect ultrasonic beams better than others, and the strength of the reflected ultrasonic beams can vary. Material features can also be at different distances from the ultrasonic detector and the time at which reflected ultrasonic beams reach the ultrasonic detector can vary. Thus, the ultrasonic testing system can measure and analyze the strength and time behavior of reflected ultrasonic beams to determine the position and size of internal defects.

The inspection ultrasonic probes (or ultrasonic active elements in the ultrasonic probes) can be configured to measure interior defects 1, 2, 3, and 4. In one aspect, the ultrasonic probes can be paired, one for transmitting and one for receiving, referred to as a "V-transmission configuration." As shown in FIG. 3A, ultrasonic probe 214A can be configured to emit an ultrasonic beam 302 along one of the paths indicated by an arrow. If a defect is present in the path of the ultrasonic beam, the ultrasonic beam can reflect from the defect (e.g., defect 1, 2, or 3) and be measured by inspection ultrasonic probe 214B. In another aspect, ultrasonic probes can be configured such that the same ultrasonic probe (e.g., probe 214A) both generates an ultrasonic beam that is reflected from a defect and measures the reflected ultrasonic beam, also referred to as pulse echo scan. As shown, inspection ultrasonic probe 214B can generate an ultrasonic beam that is reflected from defect 4 within the inspection area and measure the reflected ultrasonic beam strength. In either case, analysis of the measured ultrasonic beam can provide estimates of the size and location of the defects 1, 2, 3, and 4 within the inspection area.

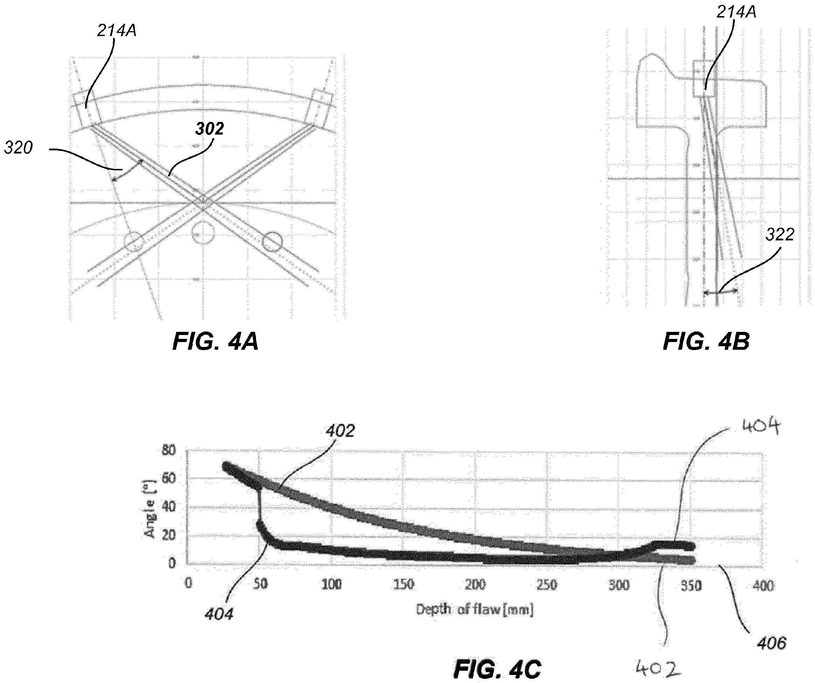

Ultrasonic probe (e.g., probe 214A, 214B, etc) can include multiple ultrasonic active elements (e.g., a 1-dimension / 2-dimension phased array of ultrasonic active elements). The ultrasonic probe can generate an ultrasonic beam (e.g., ultrasonic beam 302) and vary the direction of propagation of the ultrasonic beam. The direction of propagation (e.g., relative to the wheel) can be associated with a vertical steering angle and a horizontal steering angle. FIG. 4A illustrates exemplary vertical steering angle 320 of an ultrasonic beam emanating from the ultrasonic probe 214A. The direction of propagation can be varied along (or parallel to) the first cross-section of the wheel (e.g., first cross-section illustrated in FIG. 3A). In other words, the direction of propagation can be varied by changing the vertical steering angle 320 of the ultrasonic beam.

FIG. 4B illustrates exemplary horizontal steering angle 322 of an ultrasonic beam emanating from the ultrasonic probe 214A. The horizontal steering angle can be varied along (or parallel to) the second cross-section of the wheel (e.g., second cross-section illustrated in FIG. 3B and 4B). In other words, the direction of propagation can be varied by changing the horizontal steering angle 322 of the ultrasonic beam. Therefore, by changing the horizontal and/or vertical steering angle of the ultrasonic beam can be scanned through the volume of the wheel (e.g., a defect in the wheel can be impinged by the ultrasonic beam).

In some implementations, the ultrasonic active elements in the ultrasonic probe can generate sub-beams that can have different amplitude and phase with respect to one another. The various sub-beams can interfere with each other to produce the ultrasonic beam (e.g., ultrasonic beam 302) in a predetermined direction. By varying the phase and/or amplitude of the sub-beams, the vertical and/or horizontal steering angle of the ultrasonic beam 302 can be changed. In some implementations, the ultrasonic active elements can be configured to generate and measure ultrasonic beams and they can be arranged in a predetermined pattern with respect to one another (e.g., a line, a circle, a grid, etc.). An exemplary embodiment of an array ultrasonic probes can be found in U.S. Patent No. 9,244,043.

The vertical steering angle may need to be varied to detect defects located at various depths (e.g., defects at various distances from the running tread 206). For the various vertical steering angles, the horizontal steering angles may need to be adjusted to ensure that the ultrasonic beam impinges on the defect (e.g., ultrasonic beam does not leave the inspection area 304 before impinging the defect). If the horizontal steering angle is not adjusted for the various vertical steering angle values, the ultrasonic beam may entirely or partially miss a defect in the wheel. The relationship between the horizontal steering angle values and the vertical steering angle values can depend, for example, on the geometry / profile of the wheel. In some implementations, the ultrasonic testing system (e.g., system 200) can include a database (e.g., a predetermined table) of horizontal steering angle values corresponding to the various vertical steering angle values (predetermined based on the geometry of the wheel). The ultrasonic system can vary the horizontal and vertical steering angles based on the predetermined table of related horizontal and vertical steering angles. FIG. 4C illustrates an exemplary plot 402 of vertical steering angles and a plot 404 of horizontal steering angles that can allow for detection of internal defects at various depths 406. The predetermined table of related horizontal and vertical steering angles as a function of internal defect depths can be stored in a database.

The contact surface (e.g., running tread 206) between the wheel and the ultrasonic probe (e.g., 214A, 214B, etc.) can get deformed due to wear and tear. The wheel deformation can vary the orientation of the ultrasonic probe abutting the wheel. For example, the wheel deformation can impart a tilt angle to the ultrasonic probe. Due to the tilt angle, the ultrasonic probe may not be able to detect a defect (e.g., ultrasonic beam generated by the ultrasonic probe can entirely or partially miss the defect). In order to compensate for the tilt angle, the horizontal steering angle values may need to be readjusted (e.g., corrected). For example, the horizontal steering angle values corresponding to the various vertical steering angle values in the predetermined table of the wheel may need to be changed to ensure that the defect in the wheels are detected.

Embodiments of the present disclosure provide improved systems and methods for ultrasonic testing of wheels that can suffer from deformed surface (e.g., deformed running tread 206) due to wear and tear. The improved ultrasonic testing systems can compensate for defects on the wheel surface by varying the horizontal steering angles based on the tilt angles imparted by the surface defects abutting the ultrasonic probe. In some implementations, a scan of the wheel surface (e.g., surface of a sector of the wheel) can be performed to determine the contact surface variations (e.g., defects). This can be followed by determination of the tilt angles / corrections to the horizontal steering angles corresponding to the various location of the ultrasonic probe on the wheel surface. After the tilt angles / corrections to the horizontal steering angles are determined, the ultrasonic testing system 200 can vary the orientation of the ultrasonic probe (e.g., as a function of the location of the ultrasonic probe on the wheel surface) to compensate for contact surface variations.

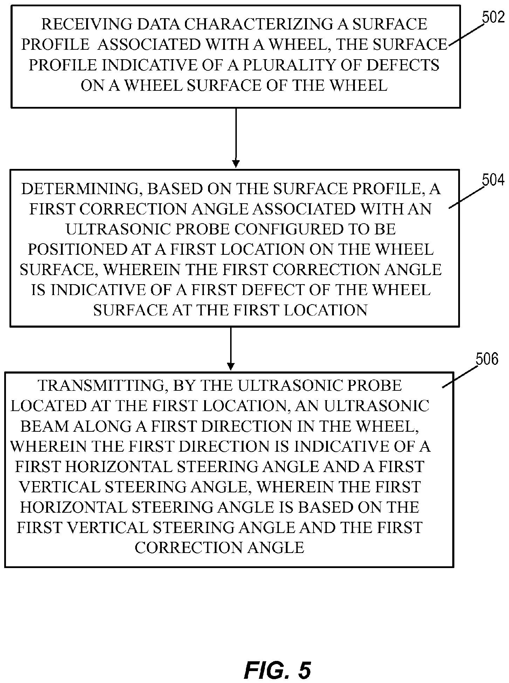

FIG. 5 is a flow chart of an exemplary method for detecting defects in a wheel with surface defects. At 502 data characterizing a profile of the wheel surface ("surface profile data") of a wheel can be received. The surface profile data of the wheel can be detected and stored in a database. The ultrasonic testing system (e.g. a control in the ultrasonic testing system comprising a computing system with one or more processors and memory) can receive the surface profile data. The surface profile data can be indicative of defects on the wheel surface. For example, the surface profile data can include the locations of the various defects on the wheel (e.g., relative to a predetermined reference location on the wheel surface). The surface profile data can also include correction angles associated with the various defects (e.g., associated with tilt angles of ultrasonic probe at the surface defects). The correction angles can be used to correct / modify horizontal steering angles of ultrasonic beams in order to account for surface defects.

The surface profile data can be generated by detecting echo of ultrasonic beams from predetermined geometries in the wheel. In some implementations, the wheel can include predetermined geometries located at predetermined horizontal steering angles. The predetermined wheel geometries can reflect ultrasonic beams transmitted along the corresponding predetermined horizontal steering angles (e.g., generated by an ultrasonic probe positioned on the surface of the wheel). A surface variation at the location of the ultrasonic probe on the wheel surface can misalign the ultrasonic probe (e.g., impart a tilt angle to the ultrasonic probe). As a result, the ultrasonic beam transmitted by the ultrasonic probe at the predetermined horizontal steering angle may not interact with the predetermined geometry and no (or attenuated) echo is generated. In order to realign the ultrasonic probe (e.g., such that the ultrasonic beam interacts with the predetermined defect), the predetermined horizontal steering angle associated with the location of the ultrasonic probe (or the defect) may need to be corrected. This can be done by determining the degree of misalignment and correcting the horizontal steering angle based on the misalignment. In other words, a correction angle can be calculated and applied (e.g., added) to the predetermined horizontal steering angle.

In some implementations, the horizontal steering angle of the ultrasonic probe can be varied until an echo of the ultrasonic beam is observed. For example, the echo can be observed at a revised horizontal steering angle which may be different from the predetermined horizontal steering angle. The difference between the predetermined horizontal steering angle and the revised horizontal steering angle can be the correction angle corresponding to the location of the ultrasonic probe / defect. The aforementioned process can be repeated for multiple locations on the wheel surface (e.g., by rotating by wheel with respect to the ultrasonic probe by the lift and rotation unit 218). A data set including correction angles for various surface defects and locations of the surface defects can be stored in a database.

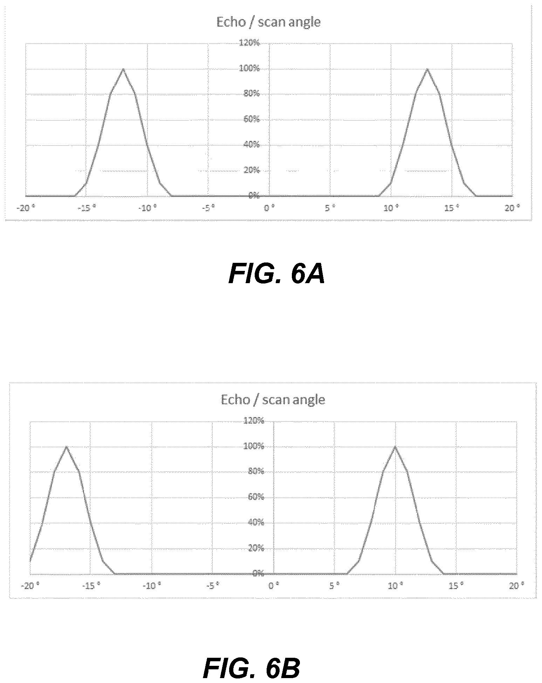

FIGS. 6A illustrates exemplary echo detection for various horizontal steering angles for a wheel surface without defects. As shown in FIG. 6A, the amplitude of the echo (of ultrasonic beam) peaks at about +13 degrees and at about -12 degrees. This is indicative that the predetermined wheel geometries are located at about +13 degrees and about -12 degrees with respect to an axis of the ultrasonic sensor positioned on the wheel without surface defects (e.g., the axis can be parallel to a radial direction extending from the center of the train wheel 202). FIGS. 6B illustrates exemplary echo detection for various horizontal steering angles for a wheel surface with defects. As shown in FIG. 6B, the amplitude of the echo (of reflected ultrasonic beam) peaks are shifted with respect to those shown in FIG. 6A. The shift in the horizontal steering angle (e.g., corresponding to reflection of ultrasonic beams from predetermined wheel geometries) can be due to the surface defect.

At 504, a first correction angle associated with an ultrasonic probe located at a first location (e.g., first location of a first surface defect) can be determined. The first correction angle can be determined from the surface profile data received at step 502. For example, the surface profile data can include the data set of surface defects (e.g., including correction angles for various surface defects and locations of the surface defects). The ultrasonic testing system can select the correction angle corresponding to (or approximate to) the location of the ultrasonic sensor (first location) in the array. The correction angle can be indicative of a change / correction in the orientation of the ultrasonic probe at the first location.

At 506, the ultrasonic probe located at the first location can transmit an ultrasonic beam along a first direction in the wheel (e.g., based on a control signal from the control of the ultrasonic testing system 200). As described above, the first direction of propagation of the ultrasonic beam can be associated with a first horizontal steering angle and a first vertical steering angle. The first horizontal steering angle can be based on the first vertical steering angle and the first correction angle. The first horizontal steering angle can be determined by identifying a predetermined horizontal steering angle associated with the vertical steering angle. This can be done, for example, by receiving a data set including values of a plurality of vertical steering angles and values of a plurality of predetermined horizontal steering angles (e.g., predetermined table of related horizontal and vertical steering angles stored in a database). After the predetermined horizontal steering angle is selected, it can be modified to determine the first horizontal steering angle (e.g., by adding the correction angle calculated at step 504). In some implementations, the predetermined table of related horizontal and vertical steering angles in the database can be modified (e.g., by replacing the predetermined horizontal steering angle with the first horizontal steering angle calculated at step 506).

The steps 502, 504 and 506 can be repeated at a second location on the wheel surface that has a second surface variation. The ultrasonic test probe 214 can be moved to the second location by moving the wheel 202 relative to the ultrasonic test probe 214 (e.g., by the rotation unit 218 based on a control signal from the control of the ultrasonic testing system 200). A second correction angle associated with the second location (or second defect) can be identified from the received surface profile. Based on the second correction angle and a second vertical steering angle, a second horizontal steering angle can be calculated. This can be done, for example, by selecting a second predetermined horizontal steering angle corresponding to the second vertical steering angle (e.g., selecting from the received predetermined table of related horizontal and vertical steering angles) and modifying the second predetermined horizontal steering angle based on the second correction angle (e.g., by adding the second correction angle to the second predetermined horizontal steering angle).

Certain exemplary embodiments will now be described to provide an overall understanding of the principles of the structure, function, manufacture, and use of the systems, devices, and methods disclosed herein. One or more examples of these embodiments are illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web interface through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

## Claims

1. A method of ultrasonically testing a wheel, the method comprising:
receiving a data set including values of a plurality of vertical steering angles and values of a plurality of predetermined horizontal steering angles corresponding to the plurality of vertical steering angles, wherein the data set is predetermined based on the geometry of a wheel;
receiving (502) data characterizing a surface profile associated with a wheel (202), the surface profile indicative of a plurality of defects on a wheel surface of the wheel (202);
determining (504), based on the surface profile, a first correction angle associated with an ultrasonic probe (214) configured to be positioned at a first location on the wheel surface, wherein the first correction angle is indicative of a first defect of the wheel surface at the first location; and
transmitting (506), by the ultrasonic probe (214) located at the first location, an ultrasonic beam (302) along a first direction in the wheel (202), wherein the first direction is indicative of a first horizontal steering angle (322) and a first vertical steering angle (320), wherein the first vertical steering angle (320) is a vertical steering angle included in the plurality of vertical steering angles of the data set, and the first horizontal steering angle (322) is based on:
a first predetermined horizontal steering angle included in the plurality of predetermined horizontal steering angles of the data set that corresponds to the first vertical steering angle (320); and
the first correction angle.

2. The method of claim 1, wherein the first horizontal steering angle (322) is a sum of the first correction angle and the first predetermined horizontal steering angle.

3. The method of claim 1 or 2, wherein the data set includes corresponding vertical steering angle and predetermined horizontal steering angle values for a plurality of depths.

4. The method of claim 1, 2, or 3, further comprising receiving at least a portion of the ultrasonic beam (302) reflected by a defect (1, 2, 3, 4) in the wheel (202), and determining a first defect location of the defect (1, 2, 3, 4).

5. The method of any preceding claim, further comprising positioning the ultrasonic probe (214) at the first location.

6. The method of any preceding claim, further comprising:
determining, based on the surface profile, a second correction angle associated with the ultrasonic probe (214) configured to be positioned at a second location on the wheel surface, wherein the second correction angle is indicative of a second defect of the wheel surface at the second location;
positioning the ultrasonic probe (214) at the second location; and
transmitting, by the ultrasonic probe (214) located at the second location, a second ultrasonic beam along a second direction in the wheel (202), wherein the second direction is indicative of a second horizontal steering angle and a second vertical steering angle, wherein the second horizontal steering angle is based on the second vertical steering angle and the second correction angle.

7. The method of any preceding claim further comprising determining the profile of the wheel surface based on echo of ultrasonic beams reflected by predetermined wheel geometries.

8. A system (200) for ultrasonically testing a wheel, the system (200) comprising:
at least one data processor; and
memory coupled to the at least one data processor, the memory storing instructions to cause the at least one data processor to perform operations comprising:
receiving a data set including values of a plurality of vertical steering angles and values of a plurality of predetermined horizontal steering angles corresponding to the plurality of vertical steering angles, wherein the data set is predetermined based on the geometry of a wheel;
receiving (502) data characterizing a surface profile associated with a wheel (202), the surface profile indicative of a plurality of defects on a wheel surface of the wheel (202), and
determining (504), based on the surface profile, a first correction angle associated with an ultrasonic probe (214) configured to be positioned at a first location on the wheel surface, wherein the first correction angle is indicative of a first defect of the wheel surface at the first location;
the system (200) further comprising:
an ultrasonic probe (214) configured to be located at the first location and communicatively coupled to the processor, the ultrasonic probe (214) configured to transmit (506), based on a control signal from the at least one data processor, an ultrasonic beam (302) along a first direction in the wheel (202), wherein the first direction is indicative of a first horizontal steering angle (322) and a first vertical steering angle (320), wherein the first vertical steering angle (320) is a vertical steering angle included in the plurality of vertical steering angles of the data set, and the first horizontal steering angle (322) is based on:
a first predetermined horizontal steering angle included in the plurality of predetermined horizontal steering angles of the data set that corresponds to the first vertical steering angle (320); and
the first correction angle.

9. The system (200) of claim 8, wherein the first horizontal steering angle (322) is a sum of the first correction angle and the first predetermined horizontal steering angle.

10. The system (200) of claim 8 or 9, wherein the ultrasonic probe (214) is configured to receive at least a portion of the ultrasonic beam (302) reflected by a defect (1, 2, 3, 4) in the wheel (202), and the at least one data processor is configured to determine a first defect location of the defect (1, 2, 3, 4).

11. The system (200) of any one of claims 8, 9, or 10, wherein the operations further include:
determining, based on the surface profile, a second correction angle associated with the ultrasonic probe (214) configured to be positioned at a second location on the wheel surface, wherein the second correction angle is indicative of a second defect of the wheel surface at the second location; and
transmitting a second control signal to a rotation unit (218), the rotation unit (218) configured to position the ultrasonic probe (214) at the second location based on the second control signal.

12. The system (200) of claim 11, wherein the operations further include:
transmitting a third control signal to the ultrasonic probe (214) located at the second location, wherein the ultrasonic probe (214) is configured to transmit a second ultrasonic beam along a second direction in the wheel (202),
wherein the second direction is indicative of a second horizontal steering angle and a second vertical steering angle, and wherein the second horizontal steering angle is based on the second vertical steering angle and the second correction angle.

13. The system (200) of any one of claims 8 to 12, wherein the operations further include determining the profile of the wheel surface based on echo of ultrasonic beams reflected by predetermined wheel geometries.

14. The system (200) of any one of claims 8 to 13, wherein the ultrasonic probe (214) comprises a plurality of ultrasonic active elements configured to generate one or more ultrasonic sub-beams.

15. The system of claim 14, wherein the operations further include determining, based on the first direction, one or more phases and one or more amplitudes associated with the one or more ultrasonic sub-beams.

## Patentansprüche

1. Verfahren zum Ultraschallprüfen eines Rades, das Verfahren umfassend:
Empfangen eines Datensatzes, der Werte einer Vielzahl von vertikalen Lenkwinkeln und Werte einer Vielzahl von vorgegebenen horizontalen Lenkwinkeln einschließt, die der Vielzahl von vertikalen Lenkwinkeln entsprechen, wobei der Datensatz basierend auf der Geometrie eines Rades vorbestimmt ist;
Empfangen (502) von Daten, die ein mit einem Rad (202) verbundenes Oberflächenprofil charakterisieren, wobei das Oberflächenprofil auf eine Vielzahl von Defekten auf einer Radoberfläche des Rades (202) hinweist;
Bestimmen (504), basierend auf dem Oberflächenprofil, eines ersten Korrekturwinkels, der mit einer Ultraschallsonde (214) verknüpft ist, die so konfiguriert ist, dass sie an einer ersten Stelle auf der Radoberfläche positioniert wird, wobei der erste Korrekturwinkel auf einen ersten Defekt der Radoberfläche an der ersten Stelle hinweist; und
Senden (506) eines Ultraschallstrahls (302) durch die an der ersten Stelle angeordnete Ultraschallsonde (214) entlang einer ersten Richtung im Rad (202), wobei die erste Richtung einen ersten horizontalen Lenkwinkel (322) und einen ersten vertikalen Lenkwinkel (320) anzeigt, wobei der erste vertikale Lenkwinkel (320) ein vertikaler Lenkwinkel ist, der in der Vielzahl von vertikalen Lenkwinkeln des Datensatzes enthalten ist, und der erste horizontale Lenkwinkel (322) auf Folgendem basiert:
einem ersten vorgegebenen horizontalen Lenkwinkel, der in der Vielzahl vorgegebener horizontaler Lenkwinkel des Datensatzes eingeschlossen ist und dem ersten vertikalen Lenkwinkel (320) entspricht; und
dem ersten Korrekturwinkel.

2. Verfahren nach Anspruch 1, wobei der erste horizontale Lenkwinkel (322) eine Summe aus dem ersten Korrekturwinkel und dem ersten vorgegebenen horizontalen Lenkwinkel ist.

3. Verfahren nach Anspruch 1 oder 2, wobei der Datensatz entsprechende vertikale Lenkwinkelwerte und vorgegebene horizontale Lenkwinkelwerte für eine Vielzahl von Tiefen einschließt.

4. Verfahren nach Anspruch 1, 2 oder 3, ferner umfassend das Empfangen von mindestens einem Teil des Ultraschallstrahls (302), der von einem Defekt (1, 2, 3, 4) im Rad (202) reflektiert wird, und das Bestimmen einer ersten Defektstelle des Defekts (1, 2, 3, 4).

5. Verfahren nach einem der vorstehenden Ansprüche, ferner umfassend das Positionieren der Ultraschallsonde (214) an der ersten Stelle.

6. Verfahren nach einem der vorstehenden Ansprüche, ferner umfassend:
Bestimmen, auf der Grundlage des Oberflächenprofils, eines zweiten Korrekturwinkels, der mit der Ultraschallsonde (214) verknüpft ist, die so konfiguriert ist, dass sie an einer zweiten Stelle auf der Radoberfläche positioniert wird, wobei der zweite Korrekturwinkel auf einen zweiten Defekt der Radoberfläche an der zweiten Stelle hinweist;
Positionieren der Ultraschallsonde (214) an der zweiten Stelle; und
Senden eines zweiten Ultraschallstrahls durch die an der zweiten Stelle angeordnete Ultraschallsonde (214) entlang einer zweiten Richtung im Rad (202), wobei die zweite Richtung einen zweiten horizontalen Lenkwinkel und einen zweiten vertikalen Lenkwinkel anzeigt, wobei der zweite horizontale Lenkwinkel auf dem zweiten vertikalen Lenkwinkel und dem zweiten Korrekturwinkel basiert.

7. Verfahren nach einem der vorstehenden Ansprüche, ferner umfassend das Bestimmen des Profils der Radoberfläche auf der Grundlage des Echos von Ultraschallstrahlen, die von vorgegebenen Radgeometrien reflektiert werden.

8. System (200) zum Ultraschallprüfen eines Rades, wobei das System (200) umfasst:
mindestens einen Datenprozessor; und
einen Speicher, der mit dem mindestens einen Datenprozessor gekoppelt ist, wobei der Speicher Anweisungen speichert, um den mindestens einen Datenprozessor zu veranlassen, Betriebe durchzuführen, umfassend:
Empfangen eines Datensatzes, der Werte einer Vielzahl von vertikalen Lenkwinkeln und Werte einer Vielzahl von vorgegebenen horizontalen Lenkwinkeln einschließt, die der Vielzahl von vertikalen Lenkwinkeln entsprechen, wobei der Datensatz basierend auf der Geometrie eines Rades vorbestimmt ist;
Empfangen (502) von Daten, die ein Oberflächenprofil charakterisieren, das mit einem Rad (202) verbunden ist, wobei das Oberflächenprofil eine Vielzahl von Defekten auf einer Radoberfläche des Rades (202) anzeigt, und
Bestimmen (504), basierend auf dem Oberflächenprofil, eines ersten Korrekturwinkels, der mit einer Ultraschallsonde (214) verknüpft ist, die so konfiguriert ist, dass sie an einer ersten Stelle auf der Radoberfläche positioniert wird, wobei der erste Korrekturwinkel auf einen ersten Defekt der Radoberfläche an der ersten Stelle hinweist;
wobei das System (200) ferner umfasst:
eine Ultraschallsonde (214), die so konfiguriert ist, dass sie sich an der ersten Stelle befindet und kommunikativ mit dem Prozessor verbunden ist, wobei die Ultraschallsonde (214) so konfiguriert ist, dass sie basierend auf einem Steuersignal von dem mindestens einen Datenprozessor einen Ultraschallstrahl (302) entlang einer ersten Richtung im Rad (202) überträgt (506), wobei die erste Richtung einen ersten horizontalen Lenkwinkel (322) und einen ersten vertikalen Lenkwinkel (320) anzeigt, wobei der erste vertikale Lenkwinkel (320) ein vertikaler Lenkwinkel ist, der in der Vielzahl von vertikalen Lenkwinkeln des Datensatzes eingeschlossen ist, und der erste horizontale Lenkwinkel (322) auf Folgendem basiert:
einem ersten vorgegebenen horizontalen Lenkwinkel, der in der Vielzahl vorgegebener horizontaler Lenkwinkel des Datensatzes eingeschlossen ist und dem ersten vertikalen Lenkwinkel (320) entspricht; und
dem ersten Korrekturwinkel.

9. System (200) nach Anspruch 8, wobei der erste horizontale Lenkwinkel (322) eine Summe aus dem ersten Korrekturwinkel und dem ersten vorgegebenen horizontalen Lenkwinkel ist.

10. System (200) nach Anspruch 8 oder 9, wobei die Ultraschallsonde (214) dazu konfiguriert ist, mindestens einen Teil des Ultraschallstrahls (302) zu empfangen, der von einem Defekt (1, 2, 3, 4) in dem Rad (202) reflektiert wird, und der mindestens eine Datenprozessor dazu konfiguriert ist, eine erste Defektstelle des Defekts (1, 2, 3, 4) zu bestimmen.

11. System (200) nach einem der Ansprüche 8, 9 oder 10, wobei die Vorgänge ferner einschließen:
Bestimmen, auf der Grundlage des Oberflächenprofils, eines zweiten Korrekturwinkels, der mit der Ultraschallsonde (214) verknüpft ist, die so konfiguriert ist, dass sie an einer zweiten Stelle auf der Radoberfläche positioniert wird, wobei der zweite Korrekturwinkel auf einen zweiten Defekt der Radoberfläche an der zweiten Stelle hinweist; und
Senden eines zweiten Steuersignals an eine Rotationseinheit (218), wobei die Rotationseinheit (218) dazu konfiguriert ist, die Ultraschallsonde (214) basierend auf dem zweiten Steuersignal an der zweiten Stelle zu positionieren.

12. System (200) nach Anspruch 11, wobei die Vorgänge ferner einschließen:
Senden eines dritten Steuersignals an die Ultraschallsonde (214), die sich an der zweiten Stelle befindet, wobei die Ultraschallsonde (214) dazu konfiguriert ist, einen zweiten Ultraschallstrahl entlang einer zweiten Richtung im Rad (202) auszusenden,
wobei die zweite Richtung einen zweiten horizontalen Lenkwinkel und einen zweiten vertikalen Lenkwinkel anzeigt, und wobei der zweite horizontale Lenkwinkel auf dem zweiten vertikalen Lenkwinkel und dem zweiten Korrekturwinkel basiert.

13. System (200) nach einem der Ansprüche 8 bis 12, wobei die Vorgänge ferner das Bestimmen des Profils der Radoberfläche auf der Grundlage des Echos von Ultraschallstrahlen einschließen, die von vorgegebenen Radgeometrien reflektiert werden.

14. System (200) nach einem der Ansprüche 8 bis 13, wobei die Ultraschallsonde (214) eine Vielzahl von aktiven Ultraschallelementen umfasst, die zum Erzeugen eines oder mehrerer Ultraschall-Teilstrahlen konfiguriert sind.

15. System nach Anspruch 14, wobei die Vorgänge ferner das Bestimmen einer oder mehrerer Phasen und einer oder mehrerer Amplituden, die mit den einem oder mehreren Ultraschall-Teilstrahlen verknüpft sind, basierend auf der ersten Richtung einschließen.

## Revendications

1. Procédé de test ultrasonore d'une roue, le procédé comprenant :
la réception d'un ensemble de données comportant des valeurs d'une pluralité d'angles de braquage vertical et des valeurs d'une pluralité d'angles de braquage horizontal prédéterminés correspondant à la pluralité d'angles de braquage vertical, dans lequel l'ensemble de données est prédéterminé en fonction de la géométrie d'une roue ;
la réception (502) de données caractérisant un profil de surface associé à une roue (202), le profil de surface indiquant une pluralité de défauts sur une surface de roue de la roue (202) ;
la détermination (504), en fonction du profil de surface, d'un premier angle de correction associé à une sonde ultrasonore (214) configurée pour être positionnée à un premier emplacement sur la surface de la roue, dans lequel le premier angle de correction est révélateur d'un premier défaut de la surface de la roue au premier emplacement ; et
la transmission (506), par la sonde ultrasonore (214) située au premier emplacement, d'un faisceau ultrasonore (302) le long d'une première direction dans la roue (202), dans lequel la première direction est révélatrice d'un premier angle de braquage horizontal (322) et d'un premier angle de braquage vertical (320), dans lequel le premier angle de braquage vertical (320) est un angle de braquage vertical inclus dans la pluralité d'angles de braquage vertical de l'ensemble de données, et le premier angle de braquage horizontal (322) est basé sur :
un premier angle de braquage horizontal prédéterminé inclus dans la pluralité d'angles de braquage horizontal prédéterminés de l'ensemble de données qui correspond au premier angle de braquage vertical (320) ; et
le premier angle de correction.

2. Procédé selon la revendication 1, dans lequel le premier angle de braquage horizontal (322) est la somme du premier angle de correction et du premier angle de braquage horizontal prédéterminé.

3. Procédé selon la revendication 1 ou 2, dans lequel l'ensemble de données comporte des valeurs correspondantes d'angle de braquage vertical et d'angle de braquage horizontal prédéterminé pour une pluralité de profondeurs.

4. Procédé selon la revendication 1, 2 ou 3, comprenant en outre la réception d'au moins une partie du faisceau ultrasonore (302) réfléchi par un défaut (1, 2, 3, 4) dans la roue (202), et la détermination d'un premier emplacement du défaut (1, 2, 3, 4).

5. Procédé selon l'une quelconque revendication précédente, comprenant en outre le positionnement de la sonde ultrasonore (214) au premier emplacement.

6. Procédé selon l'une quelconque revendication précédente, comprenant en outre :
la détermination, en fonction du profil de surface, d'un second angle de correction associé à la sonde ultrasonore (214) configurée pour être positionnée à un second emplacement sur la surface de la roue, dans lequel le second angle de correction est révélateur d'un second défaut de la surface de la roue au second emplacement ;
le positionnement de la sonde ultrasonore (214) au second emplacement ; et
la transmission, par la sonde ultrasonore (214) située au second emplacement, d'un second faisceau ultrasonore le long d'une seconde direction dans la roue (202), dans lequel la seconde direction est révélatrice d'un second angle de braquage horizontal et d'un second angle de braquage vertical, dans lequel le second angle de braquage horizontal est basé sur le second angle de braquage vertical et le second angle de correction.

7. Procédé selon l'une quelconque des revendications précédentes comprenant en outre la détermination du profil de la surface de la roue en fonction de l'écho des faisceaux ultrasonores réfléchis par les géométries de roue prédéterminées.

8. Système (200) de test ultrasonore d'une roue, le système (200) comprenant :
au moins un processeur de données ; et
une mémoire couplée à l'au moins un processeur de données, la mémoire stockant des instructions pour amener l'au moins un processeur de données à effectuer des opérations comprenant :
la réception d'un ensemble de données comportant des valeurs d'une pluralité d'angles de braquage vertical et des valeurs d'une pluralité d'angles de braquage horizontal prédéterminés correspondant à la pluralité d'angles de braquage vertical, dans lequel l'ensemble de données est prédéterminé en fonction de la géométrie d'une roue ;
la réception (502) de données caractérisant un profil de surface associé à une roue (202), le profil de surface indiquant une pluralité de défauts sur une surface de roue de la roue (202), et
la détermination (504), en fonction du profil de surface, d'un premier angle de correction associé à une sonde ultrasonore (214) configurée pour être positionnée à un premier emplacement sur la surface de la roue, dans lequel le premier angle de correction est révélateur d'un premier défaut de la surface de la roue au premier emplacement ;
le système (200) comprenant en outre :
une sonde ultrasonore (214) configurée pour être située au premier emplacement et couplée en communication avec le processeur, la sonde ultrasonore (214) étant configurée pour transmettre (506), en fonction d'un signal de commande provenant de l'au moins un processeur de données, un faisceau ultrasonore (302) le long d'une première direction dans la roue (202), dans lequel la première direction est révélatrice d'un premier angle de braquage horizontal (322) et d'un premier angle de braquage vertical (320), dans lequel le premier angle de braquage vertical (320) est un angle de braquage vertical inclus dans la pluralité d'angles de braquage vertical de l'ensemble de données, et le premier angle de braquage horizontal (322) est basé sur :
un premier angle de braquage horizontal prédéterminé inclus dans la pluralité d'angles de braquage horizontal prédéterminés de l'ensemble de données qui correspond au premier angle de braquage vertical (320) ; et
le premier angle de correction.

9. Système (200) selon la revendication 8, dans lequel le premier angle de braquage horizontal (322) est la somme du premier angle de correction et du premier angle de braquage horizontal prédéterminé.

10. Système (200) selon la revendication 8 ou 9, dans lequel la sonde ultrasonore (214) est configurée pour recevoir au moins une partie du faisceau ultrasonore (302) réfléchi par un défaut (1, 2, 3, 4) dans la roue (202), et l'au moins un processeur de données est configuré pour déterminer un premier emplacement de défaut du défaut (1, 2, 3, 4).

11. Système (200) selon l'une quelconque des revendications 8, 9, ou 10, dans lequel les opérations comportent en outre :
la détermination, en fonction du profil de surface, d'un second angle de correction associé à la sonde ultrasonore (214) configurée pour être positionnée à un second emplacement sur la surface de la roue, dans lequel le second angle de correction est révélateur d'un second défaut de la surface de la roue au second emplacement ; et
la transmission d'un deuxième signal de commande à une unité de rotation (218), l'unité de rotation (218) étant configurée pour positionner la sonde ultrasonore (214) au second emplacement en fonction du deuxième signal de commande.

12. Système (200) selon la revendication 11, dans lequel les opérations comportent en outre :
la transmission d'un troisième signal de commande à la sonde ultrasonore (214) située au second emplacement, dans lequel la sonde ultrasonore (214) est configurée pour transmettre un second faisceau ultrasonore le long d'une seconde direction dans la roue (202),
dans lequel la second direction est révélatrice d'un second angle de braquage horizontal et d'un second angle de braquage vertical, et dans lequel le second angle de braquage horizontal est basé sur le second angle de braquage vertical et le second angle de correction.

13. Système (200) selon l'une quelconque des revendications 8 à 12, dans lequel les opérations comportent en outre la détermination du profil de la surface de la roue en fonction de l'écho des faisceaux ultrasonores réfléchis par des géométries de roue prédéterminées.

14. Système (200) selon l'une quelconque des revendications 8 à 13, dans lequel la sonde ultrasonore (214) comprend une pluralité d'éléments actifs ultrasonores configurés pour générer un ou plusieurs sous-faisceaux ultrasonores.

15. Système selon la revendication 14, dans lequel les opérations comportent en outre la détermination, en fonction de la première direction, d'une ou de plusieurs phases et d'une ou de plusieurs amplitudes associées aux un ou plusieurs sous-faisceaux ultrasonores.
